# EUROPEAN PATENT SPECIFICATION

(11) **EP 1 106 584 B1**
(45) Date of publication and mention of the grant of the patent: **14.11.2007**
(21) Application number: 00126272.4
(22) Date of filing: 01.12.2000
(51) Int. Cl.: C03B 37/014, C03B 37/012, C03C 15/00

(54) **Method and apparatus for manufacturing a preform for an optical fibre**
Verfahren und Vorrichtung zum Herstellen einer Vorform für optische Fasern
Procédé et dispositif de fabrication d'une préforme pour fibres optiques

(30) Priority: 01.12.1999 JP 34161699; 01.12.1999 JP 34183499; 17.12.1999 JP 35920299; 26.01.2000 JP 2000017021; 24.02.2000 JP 2000047135; 03.04.2000 JP 2000100418; 04.04.2000 JP 2000102643; 20.04.2000 JP 2000119186
(43) Date of publication of application: 13.06.2001
(60) Divisional application: 07075824.8
(73) Proprietor: Shin-Etsu Chemical Co., Ltd., Chiyoda-ku Tokyo (JP)
(72) Inventor: Shimada, Tadakatsu,, Annaka-shi, Gunma (JP); Inoue, Dai,, Annaka-shi, Gunma (JP); Oyamada, Hiroshi,, Annaka-shi, Gunma (JP); Hatayama, Kazuhisa,, Annaka-shi, Gunma (JP); Machida, Hiroshi,, Annaka-shi, Gunma (JP); Otosaka, Tetsuya,, Annaka-shi, Gunma (JP); Saitoh, Fumio,, Annaka-shi, Gunma (JP); Nakashima, Yasuhiro,, Annaka-shi, Gunma (JP); Kamio, Takeshi,, Annaka-shi, Gunma (JP); Terashima, Masami,, Annaka-shi, Gunma (JP); Arisaka, Isao,, Annaka-shi, Gunma (JP); Kemmochi, Soichiro,, Chiyoda-ku, Tokyo (JP); Hirasama, Hideo,, Annaka-shi, Gunma (JP)
(74) Representative: Pfenning, Meinig & Partner GbR

(56) References cited:
- EP-A- 0 519 468
- CA-A- 2 105 641
- PATENT ABSTRACTS OF JAPAN vol. 97, no. 6, 30 June 1997 (1997-06-30) & JP 09 030825 A (SHIN ETSU CHEM CO LTD), 4 February 1997 (1997-02-04)
- PATENT ABSTRACTS OF JAPAN vol. 96, no. 11, 29 November 1996 (1996-11-29) & JP 08 183631 A (SHIN ETSU CHEM CO LTD), 16 July 1996 (1996-07-16)
- PATENT ABSTRACTS OF JAPAN vol. 199, no. 502, 31 March 1995 (1995-03-31) -& JP 06 305764 A (SUMITOMO ELECTRIC IND LTD), 1 November 1994 (1994-11-01)
- PATENT ABSTRACTS OF JAPAN vol. 17, no. 533, 27 September 1993 (1993-09-27) -& JP 05 147964 A (SUMITOMO ELECTRIC IND LTD), 15 June 1993 (1993-06-15)
- PATENT ABSTRACTS OF JAPAN vol. 13, no. 262, 16 June 1989 (1989-06-16) & JP 01 065039 A (SUMITOMO ELECTRIC IND LTD), 10 March 1989 (1989-03-10)
- PATENT ABSTRACTS OF JAPAN vol. 1999, no. 14, 22 December 1999 (1999-12-22) & JP 11 240731 A (FUJIKURA LTD), 7 September 1999 (1999-09-07)
- PATENT ABSTRACTS OF JAPAN vol. 14, no. 417, 10 September 1990 (1990-09-10) & JP 02 160636 A (SUMITOMO ELECTRIC IND LTD), 20 June 1990 (1990-06-20)
- PATENT ABSTRACTS OF JAPAN vol. 11, no. 267, 28 August 1987 (1987-08-28) -& JP 62 070243 A (SUMITOMO ELECTRIC IND LTD), 31 March 1987 (1987-03-31)
- PATENT ABSTRACTS OF JAPAN vol. 13, no. 262, 16 June 1989 (1989-06-16) & JP 01 065041 A (SUMITOMO ELECTRIC IND LTD), 10 March 1989 (1989-03-10)
- PATENT ABSTRACTS OF JAPAN vol. 14, no. 215, 8 May 1990 (1990-05-08) & JP 02 051438 A (HITACHI CABLE LTD), 21 February 1990 (1990-02-21)
- PATENT ABSTRACTS OF JAPAN vol. 11, no. 381, 12 December 1987 (1987-12-12) & JP 62 153135 A (SUMITOMO ELECTRIC IND LTD), 8 July 1987 (1987-07-08)
- PATENT ABSTRACTS OF JAPAN vol. 1999, no. 11, 30 September 1999 (1999-09-30) -& JP 11 171581 A (FUJIKURA LTD), 29 June 1999 (1999-06-29)

## Description

### BACKGROUND OF THE INVENTION

### 1. Field of the Invention

The present invention relates to an optical fiber base material grasping apparatus.

### 2. Description of the Related Art

An optical fiber is generally manufactured as follows. There is called as VAD method in which a porous base material is obtained such that particles of SiO₂ made from material gas, for instance SiO4, subjected to hydrolysis with oxyhydrogen flame are deposited on an initial material being moving up while rotating. In another called OVD method, a porous base material is obtained such that particles of SiO₂ made from material gas, for instance SiO4, subjected to hydrolysis with oxyhydrogen flame from a burner movable relatively to an initial material are deposited on the initial material being rotating. Still further, there is called as MCVD method in which a material gas flows into a cladding material of a quartz tube or the like and the gas is subjected to reaction and deposition therein. Then, while a hanging mechanism is hanging the base material thus obtained, the base material is subjected to heating and dehydrating to vitrify, so that a preform for an optical fiber is manufactured. Finally, an optical fiber is obtained by drawing the preform thus manufactured.

During these manufacturing process, the natural frequency for rotation of the soot deposited material being deposited the soot on the initial material shifts from lower to higher as the soot deposited material is growing up. When the natural frequency reaches up to integer times as much as the rotation number of the rotary shaft, the growing point positioned at the lower end portion of the soot material starts swinging in great measure, so that it is difficult to uniformly deposit glass particles thereon. Consequently, un desired singularities generates in the soot deposited material. It is problematic that an optical fiber obtained by drawing a preform formed by vitrifying such a soot deposited material has unstable characteristics in the length direction of the preform, as the cutoff wave length and the mode field diameter thereof extremely vary at the singularities, as well as the polarized mode dispersion for an optical signal transmitting within the optical fiber becomes large. Especially, the polarized made dispersion gets more important issue as the transmission density of signals become larger for an optical fiber.

It is found, by the number of research, that the polarized mode dispersion is caused by birefringence in the core of the optical fiber, and the birefringence is caused to non-circular shape of the core, the coating layer coating on the optical fiber, stress within the optical fiber due to status and bending of the cable.

It is thought the cause of the non-circular shape of the core or the cladding is, for instance, swings or uneven rotations of the soot deposited material during manufacturing.

Generally, with respect to generating the swing, in case that a bar is hung at the upper end thereof, a swingy rotation occurs at the lower end of the bar when the rotary axis of the bar deviates from the central axis of the bar.

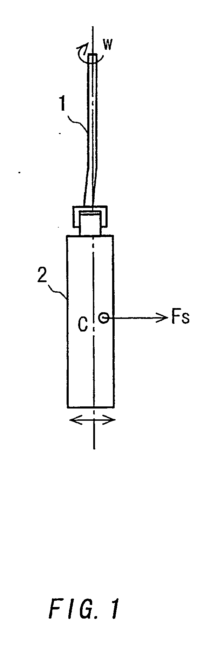

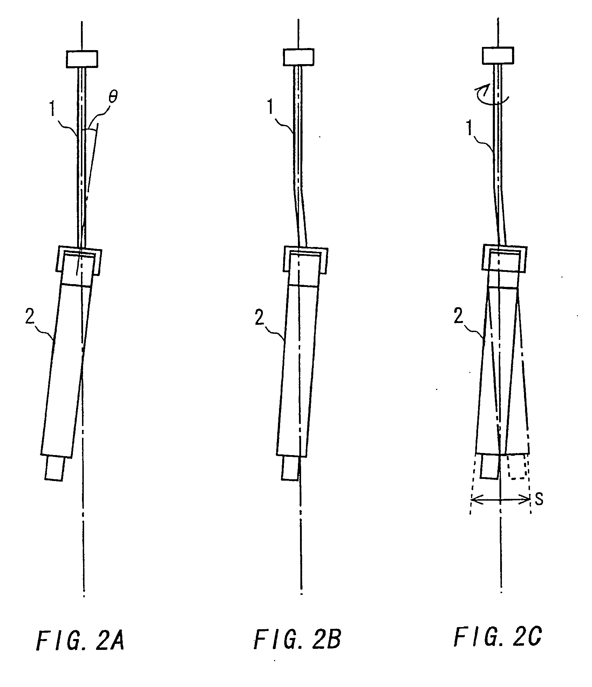

More detail will be explained, referring to Figs. 1 and 2A to 2C. Fig. 1 illustrates a condition that an initial material 2 is hung by an upper portion of a support shaft 1. This is an example case that the central axis of the initial material 2 displaces from the rotary axis of the support shaft 1. The centrifugal force Fs at the angular speed ω acts on the weight center C of the initial material 2, so that the swing occurs at the lower end of the initial material 2 in the direction of arrow in Fig. 1. Figs. 2A shows a condition immediately after attaching the initial material 2 to the lower end portion of the support shaft 1, and wherein the central axis of the initial material 2 deviates from the rotary axis of the support shaft 1 by an angle θ. Fig. 2B illustrates a condition that balance is made by flexing the support shaft 1. Fig. 2C shows a condition that the lower end portion of the initial material 2 swings in the arrowed direction while the support shaft 1 is rotating. As described, when the central axis of the initial material 2 deviates from the rotary axis of the support shaft 1, the support shaft 1 having rigidity bends until the initial material 2 stands still at the moment balanced position. Under this condition, the lower end portion of the initial material 2 has the swing having the width S during rotation.

As manufacturing the optical fiber base material, when the swing of the lower end portion the initial material 2 during the VAD or OVD method occurs but has the relatively small width, glass particles are deposited eccentrically with respect to the center of the initial material. On the other hand, the swing is the relatively large width, the soot deposited material, which is growing glass particles up on the initial material, is forced to swingy rotate extremely in the circumferential direction.

Furthermore, as heating and sintering to vitrify the porous glass base material, if the lower end of the base material swings, the distance between the base material and the heat source varies, so that the received quantity of heat varies in the circumferential direction. Consequently, the vitrifying speed of the base material varies in the diameter direction, so that the initial material is positioned in the eccentric manner for the major diameter of the preform thus obtained.

JP-A-02-051438 discloses a method for producing a porous parent material for optical fiber by revolving a core material and causing a hydrolytic reaction by blowing oxy-hydrogen flame containing a parent material of glass onto external periphery of the core material, and depositing a porous glass body to the core material. A device for adjusting the horizontal position and a device for adjusting the angle are provided to a holder for the top part of the core material, adjusting thus the horizontal position of the core material in relation to the revolving shaft and the angle of the core material to the revolving shaft. Thus, the degree of revolution of the core material is corrected and an inexpensive optical fiber having no eccentric core and having high performance can be obtained.

JP-A-05-147964 shows a structure for connecting an optical fiber base material which is constituted to detain a head part which is provided to the top end of a second dummy bar supporting the optical fiber base material and is larger in diameter than the second dummy bar to the lower part of a connecting member connected to a first dummy bar gripped in the upper part by a gripping member. A tapered surface which is a rotatively symmetrical surface with the perpendicular axis as a center and has the diameter gradually decreasing downward and supports the head part from below is formed in the lower part of the connecting member. On the other hand, the head part has a contact part which is concentrical around the axis of the second dummy bar with respect to the tapered surface. In addition, the supporting surface and the head part come into line contact via the contact part and, therefore, the perpendicularity can be easily obtained.

JP-A-06-305764 describes a means for automatically adjusting the position of clamping member so as to allow the central axis of a first dummy rod to align with the central axis of an optical fiber drawing device. Namely, the position of the first dummy rod clamped with the clamping member is adjusted so as to allow the central axis of the first dummy rod to align with the central axis of the optical fiber drawing device by moving a (X, Y) position of the clamping member which is arranged so as to be movable in the horizontal plane orthogonal to the central axis of the first dummy rod. Then a second dummy rod which supports an optical fiber preform is connected to the first dummy rod through a connecting member.

Further from JP-A-01-065041 a device for producing a porous optical fiber preform is known, wherein the starting material to form the optical fiber center part is vertically held by a rotary chuck, and the fine particles of a glass material formed by flame hydrolysis are deposited on the outer periphery of the starting material. IN this case, the swirling quantity of the part of the starting material immediately before deposition is successively measured by a measuring device arranged in the vicinity of the deposition point below the position to be deposited with the fine particles. The measured value is inputted to a controller; the claw part of the rotary chuck is offset by an XY stage in the horizontal plane from the center of the rotating shaft to decrease the swirling quantity to zero, and the swirling of the part of the starting material immediately before deposition is suppressed.

Finally, JP-A-62-070243 discloses a device for producing an optical fiber preform wherein, prior to the deposition of glass soot on the outer surface of a quartz glass rod, the quartz glass rod is rotated by a rotary chuck and dial gauges of an upper and lower correction jigs are applied to the glass rod to measure the whirling and its center. A part of an upper dummy above the correction jig is heated and softened with a hand burner and the micrometer heads of the two correction jigs are pressed toward the dummy part until the whirling measured by the dial gauge coincides with the center value determined at first. A combustion gas and a raw material gas are introduced through a burner and glass soot is deposited in the glass rod to obtain the objective optical fiber preform.

### SUMMARY OF THE INVENTION

Therefore, it is an object of the present invention to provide an optical fiber base material grasping apparatus which overcomes the above issues in the related art. This object is achieved by the combination described in the independent claim. The dependent claims define further advantageous and exemplary combinations of the present invention.

According to the invention an optical fiber base material grasping apparatus for holding a bar material having an axis comprises a support member having a center axis, said support member being rotatable around said center axis, and an adjusting mechanism for reducing the eccentricity of the bar material in relation to the support member, which grasping apparatus is characterized in that said adjusting mechanism includes a locking portion provided on a glass rod coaxially joined to the bar material, which locking portion is in the form of a wedge-like groove expanding in the direction of the axis of the bar material, whereby the broadest portion of the wedge-like groove is at the side of the bar material; a contact portion making contact with said locking portion whereby said contact portion presses said locking portion toward said support member in a direction almost perpendicular to the axis of the bar material due to the own weight of the bar material, wherein said support member includes a tube portion having an inner surface, into which one end of the glass rod is inserted with a certain margin, and wherein said contact portion of said adjusting mechanism includes a pin put between said inner surface of said tube portion and said locking portion through said tube portion.

According to a preferred embodiment said pin has a flat area making contact with said locking portion.

According to a still further preferred embodiment said locking portion has a slope in which an angle formed between said slope and the axis direction of the glass rod is from 10 to 50 degrees.

The invention will become more apparent from the following description of embodiments taken in conjunction with the accompanying drawings.

### BRIEF DESCRIPTION OF THE DRAWINGS

Fig. 1 illustrates moments of force for a swingy rotation movement during rotation of an initial member hung by a support shaft.
Figs. 2A to 2C shows a swingy rotation movement along with rotation of an initial member hung by a support shaft with a certain deviation.
Fig. 3 illustrates a sectional view of a hanging tool for a porous glass base material according to an embodiment of the present invention.
Fig. 4 illustrates a sectional view in part of the hanging tool for a porous glass base material according to the embodiment of the invention.
Fig. 5 shows a correlation of a maximum eccentricity at sintering, with an angle θ between a slanting surface forming a pyramid recess portion and a side surface of a glass rod.
Fig. 6 illustrates another sintering apparatus to which the embodiment of the invention is applied.
Fig. 7 shows a diagram of a distribution of a refractive index difference Δn(%) with respect to the length direction of a glass base material for an optical fiber.

### DETAILED DESCRIPTION OF THE INVENTION

The invention will now be described based on the preferred embodiment, which does not intend to limit the scope of the present invention, but exemplify the invention. All of the features and the combinations thereof described in the embodiment are not necessarily essential to the invention.

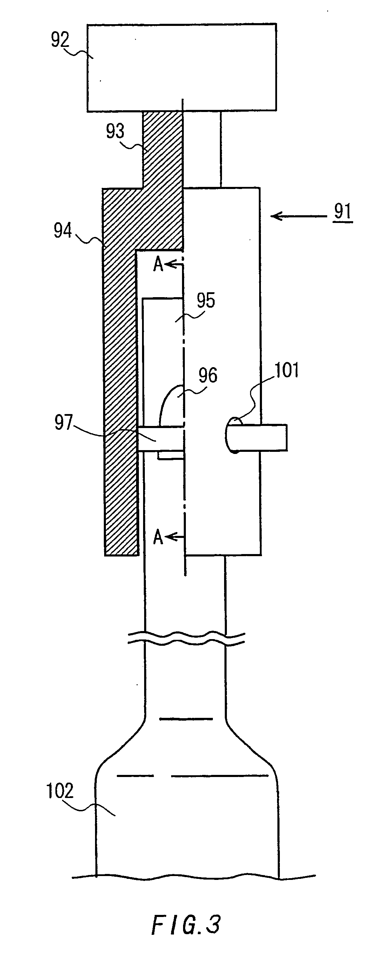

Fig. 3 illustrates a sectional view of a hanging tool for a porous glass base material according to an embodiment of the present invention.

The hanging tool 91 for a base material has a tubular portion 94 and a shaft 93 at the upper end of the tubular portion 94. The shaft 93 connects to a device 92, for instance, which is a motor for moving a base material up and down while rotating the same.

A glass rod 95 which has a major diameter being slightly smaller than the minor diameter of the tubular portion 94 is inserted into the tubular portion 94 with a certain margin. A pyramid recess portion 96 in which the lower recesses deeper is formed from a side surface of the glass rod 95.

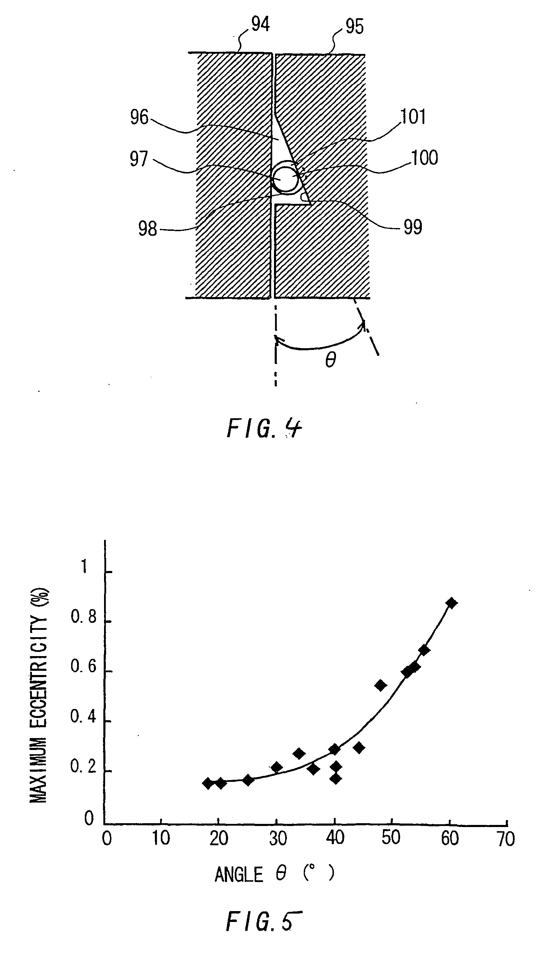

As a sectional view in part of the hanging tool is illustrated in Fig. 4, two holes 101 are pierced through a side wall of the tubular portion 94 while an inner wall of the tubular portion 94 is removed in part. A pin 97 having a column shape and a flat surface 100 thereon is inserted into the holes 101 such that the pin 97 penetrates the tubular portion 94. The pin 97 is put into a gap between the inner wall of the tubular portion 94 and the pyramid recess portion 96. The flat surface 100, which aligns angles with a slope surface 99 forming the pyramid recess 99, makes an area contact with the slope surface 99, as well as an arc circumference of the pin 97 makes a linear contact with the inner surface 98 of the tubular portion 94. The side surface of the glass rod 95 opposing the pyramid recess 96 makes a linear contact with the inner wall of the tubular portion 94.

A porous glass base material 102, as an example of a bar material, coaxially join with the lower end of the glass rod 95. Accordingly, the base material 102 is hung from the device 92 with the hanging tool 91.

The hanging tool 91 described above is used during sintering a porous glass material as follows.

At first, glass particles are deposited via OVD method on a core rod formed via VAD, so that a porous glass base material 102 having the diameter of about 260 mm, the length of about 1200 mm and the weight of about 50 kg is manufactured.

The pyramid recess 96 in which the lower portion there of is deeper is formed by grinding the side surface of the glass material by a grinder. The base material 102 is coaxially welded to the lower end of the glass rod 95.

The glass rod 95 is inserted into the tubular portion 94 of the hanging tool 91 up to height where the pyramid recess 96 is got a view from the holes 101 of the tubular portion 94. The pin 97 is inserted into one of the holes 101 while the flat surface 100 of the pin 97 is almost parallel to the slope surface 99 of the pyramid recess portion 96. The pin 97 is further pushed through the gap between the inner surface of the tubular portion and the pyramid recess 96, and finally penetrates the other hole 101.

In next, the shaft 93 of the hanging tool 91 is connected to the motor 92 to hang the glass rod 95. Due to this, the flat surface 100 of the pint 97 makes a contact in a certain area with the slope surface 99 of the pyramid recess 96.

The weight of the glass rod 95 exerts pressure on the flat surface 100 of the pin 97. The pin 97 receives a downward coupling force at the flat surface 100. Due to this, at a contact point between the pin 97 and the surface 98 of the inner circumference of the hole 101 provided in the adjusting mechamism 91 a coupling force works on the pin 97 to push the tubular portion 94 upward. A component of this force presses the side surface of the glass rod 95 opposite to the pyramid recess 96 into a linear contact with the inner wall of the hanging tool 91. The resultant friction fastens the glass rod 95 to the hanging tool 91.

Rotary axes of the motor 92 and the glass material 102 are coincide with each other, then the direction of the rotary axes is directed to the vertical direction. The glass material 102 is inserted into a reactor which has a heating furnace arranged around the circumferential the reactor. The base material 102 is moved down while it is rotated by the drive of the motor 92. Since the glass rod 95 is fastened to the hanging tool 91 and the rotary axis of the base material 102 is directed to the vertical direction, the base material 102 revolves without swings. The base material 102 is sintered in sequence from the bottom as passing by the heating furnace.

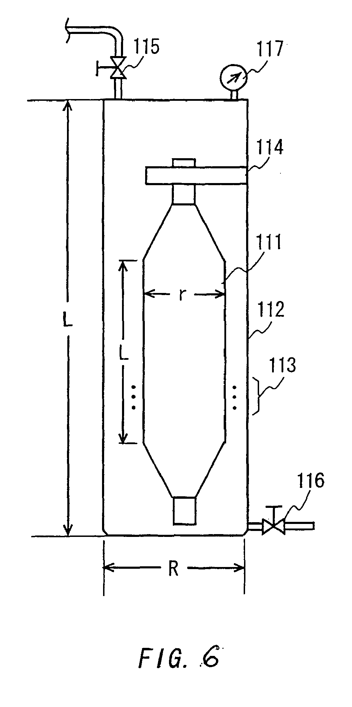

According to the embodiment described above, fifteen (15) porous glass base materials having various angles θ between the slope surface 99 of the pyramid recess 96 and the side surface of the glass rod 95 were prepared and sintered. The displacement between the center point of the core and the center of the cladding surrounding the core was measured in the length direction for each of the base materials 102 thus formed. The ratio of the maximum displacement to the mean major diameter, i.e. the maximum eccentricity was figured out. The relationship between the angle θ and the maximum eccentricity is indicated in Fig. 5.

When the angle θ is equal to or less than 40 degree, the maximum eccentricity can be reduced down to about 0.3 %. The connecting loss is enough small to neglect for an optical fiber obtained from the base material having the maximum eccentricity of such a range. If the angle θ is greater than 50 degree, the maximum eccentricity became rapidly large, and therefore the connecting loss of an optical fiber thus obtained.

In the present embodiment described above, the hanging tool hangs a porous glass base material during sintering. However, the hanging tool may hang a porous glass base material which is growing up via VAD method.

Moreover, in the sintering process to a porous glass base material, preferably, an end portion of the base material is moved to a position near the heating zone, and then it is maintained at the position for a prescribed period from the time when the heating zone of the reactor reaches a sintering temperature. Consequently, the sintering makes progress in advance at the end portion of the base material, the end where the sintering process begins, and then the sintering process starts to the glass material, so that the heating irregularity may vanish at the end portion where the sintering process starts.

The inventors of the present invention have found that, in the sintering process to a base material, an end portion of the base material is moved to a position near the heating zone, and then it is maintained at the position for a prescribed period from the time when the heating zone of the reactor reaches a sintering temperature, preferable numerical values of the prescribed period, i.e. the elapsed time T depend on the minor diameter, the length and the volume of the reactor, and the major diameter of the base material and the length of the large diameter portion of the base material. More specifically, the elapsed time T is determined to satisfy the following formula: T n(R²L-r²l)/4Q, so that problems which are likely to arise during sintering are solved.

Furthermore, after the heating zone of the reactor reaches a sintering temperature, it is maintained at the sintering temperature for the prescribed period until the atmosphere gas is thoroughly replaced with the treatment gas, for instance Ar, and the treatment gas adequately reaches up to the core of the base material, and then the base material is moved to the heat zone for sintering.

According to the sintering process described above, the beginning portion where conventionally the sintering process is insufficient has the less heating irregularity because the base material starts moving after the sufficient period is elapsed from the time when the sintering temperature comes, so that the base material for optical fibers which have stable characteristics can be manufactured.

### EXAMPLE

A sintering process to a large size porous glass base material was carried out, using a sintering apparatus as shown in Fig. 6. The sintering apparatus as shown in Fig. 6 included a hanging tool 114, an intake bulb 115, an exhaust bulb 116 and a pressure gage 117.

At first, the base material 111 was set into a reactor 112, and then the reactor 112 turned up the heat. After a heat zone 113 of the reactor 112 reached up to the sintering temperature, the process was waiting for thirty (30) minutes as the elapsed time T. After that, the base material 111 was moved into the heat zone 113, and started sintering. Consequently, the dehydration and vitrifying process were carried out.

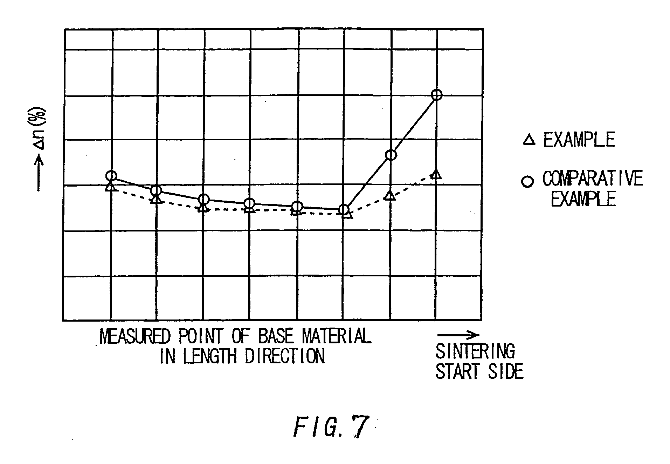

With respect to the base material thus obtained, a refractive index difference Δn(%) from the reference index was measured along the length direction. The result is indicated in Fig. 7. In Fig. 7, triangle symbols (Δ) represent the measured values according to this Example.

Furthermore, after the heat zone 113 of the reactor 112 reached up to the sintering temperature, it elapsed in time of thirty (30) minutes and the atmosphere gas was sufficiently replaced with Ar gas. Then the base material 111 started moving to the heat zone 113, so that the sintering process was achieved. Under this condition, the similar results were obtained.

### COMPARATIVE EXAMPLE

A porous glass base material was sintered, using the same apparatus as Example 11 but the different conditions for comparison.

After the base material is installed in the sintering apparatus, the reactor turned the heat up. Immediately after the reactor heated up to the sintering temperature, the base material is moved to the heat zone so that a base material for an optical fiber was sintered. With respect to the base material thus sintered, a refractive index difference Δn(%) from the reference index was measured, similar to the Example. The result is indicated in Fig. 7. In Fig. 7, circle symbols (o) represent the measured values according to the Comparative Example.

As apparent from Fig. 7, the base material of the Example had no insufficient heating at the beginning but the uniform refractive index in the length direction, and was superior than conventional ones.

As described above, the base material hanging tool according to the present embodiment can certainly and easily hang a glass rod to which a base material is welded, as well as rotate the base material without swings. Therefore, the base material can be subjected to the heat treatment like the sintering without eccentricity. High quality optical fibers having no connecting loss can be obtained from the base material thus formed.

Moreover, according to the present embodiment, after the reactor reaches up to the sintering temperature, the process is waiting for the prescribed period, and then the base material is subjected to the process at a uniform speed, so that the treatment gas can reach the core of the base material, and the base material which has little irregular heat and little fluctuation of the characteristics can be manufactured with high efficiency.

## Claims

1. An optical fiber base material grasping apparatus for holding a bar material (102) having an axis, comprising:
a support member (93, 94) having a center axis, said support member (93, 94) being rotatable around said center axis; and
an adjusting mechanism (91) for reducing the eccentricity of the bar material (102) in relation to the support member (93, 94)
**characterized in that** said adjusting mechanism (91) includes:
a locking portion (96) provided on a glass rod (95) coaxially joined to the bar material (102), which locking portion (96) is in the form of a wedge-like groove expanding in the direction of the axis of the bar material (102), whereby the broadest portion of the wedge-like groove is at the side of the bar material (102);
a contact portion making contact with said locking portion (96) whereby said contact portion (97) presses said locking portion (96) toward said support member (93, 94) in a direction almost perpendicular to the axis of the bar material (102) due to the own weight of the bar material (102),
wherein
said support member (93, 94) includes a tube portion (94) having an inner surface (98), into which one end of the glass rod (95) is inserted with a certain margin, and wherein said contact portion of said adjusting mechanism includes a pin (97) put between said inner surface (98) of said tube portion (94) and said locking portion (96) through said tube portion.

2. The optical fiber base material grasping apparatus as claimed in claim 1 **characterized in that** said pin (97) has a flat area (100) making contact with said locking portion (96).

3. The optical fiber base material grasping apparatus as claimed in claim 2 **characterized in that** said locking portion (96) has a slope (99) in which an angle formed between said slope (99) and the axis direction of the glass rod (95) is from 10 to 50 degrees.

## Patentansprüche

1. Haltevorrichtung für das Basismaterial einer optischen Faser zum Halten eines Stabmaterials (102) mit einer Achse, welche aufweist:
ein Stützteil (93, 94) mit einer Mittelachse, welches Stützteil (93, 94) um die Mittelachse drehbar ist; und
einen Einstellmechanismus (91) zum Verringern der Exzentrizität des Stabmaterials (102) in Beziehung auf das Stützteil (93, 94),
**dadurch gekennzeichnet, dass** der Einstellmechanismus (91) enthält:
einen in einem Glasstab (95), der koaxial mit dem Stabmaterial (102) verbunden ist, vorgesehenen Verriegelungsbereich (96), welcher Verriegelungsbereich (96) die Form einer keilartigen Nut hat, die sich in der Richtung der Achse des Stabmaterials (102) erstreckt, wodurch der breiteste Bereich der keilartigen Nut auf der Seite des Stabmaterials (102) ist;
einen Kontaktbereich, der einen Kontakt mit dem Verriegelungsbereich (96) bildet, wodurch der Kontaktbereich (97) den Verriegelungsbereich (96) gegen das Stützteil (93, 94) in einer Richtung nahezu senkrecht zu der Achse des Stabmaterials (102) aufgrund des Eigengewichts des Stabmaterials (102) drückt,
wobei
das Stützteil (93, 94) einen Rohrbereich (94) mit einer inneren Oberfläche (98) enthält, in den ein Ende des Glasstabs (95) mit einem gewissen Spiel eingeführt ist, und wobei der Kontaktbereich des Einstellmechanismus einen Stift (97) enthält, der zwischen der inneren Oberfläche (98) des Rohrbereichs (94) und dem Verriegelungsbereich (96) durch den Rohrbereich eingesetzt ist.

2. Haltevorrichtung für das Basismaterial einer optischen Faser nach Anspruch 1, **dadurch gekennzeichnet, dass** der Stift (97) einen flachen Bereich (100) hat, der den Kontakt mit dem Verriegelungsbereich (96) bildet.

3. Haltevorrichtung für das Basismaterial einer optischen Faser nach Anspruch 2, **dadurch gekennzeichnet, dass** der Verriegelungsbereich (96) eine Schräge (99) hat, wobei der zwischen der Schräge (99) und der Achsenrichtung des Glasstabs (95) gebildete Winkel von 10 bis 50 Grad beträgt.

## Revendications

1. Dispositif de préhension d'un matériau de base pour fibres optiques, permettant de tenir un matériau en barre (102) présentant un axe, comprenant :
un élément de support (93, 94) ayant un axe central, ledit élément de support (93, 94) pouvant tourner autour dudit axe central ; et
un mécanisme d'ajustement (91) pour réduire l'excentricité du matériau en barre (102) par rapport à l'élément de support (93, 94),
**caractérisé en ce que** ledit mécanisme d'ajustement (91) comprend :
une partie de verrouillage (96) prévu sur une tige de verre (95) reliée de façon coaxiale au matériau en barre (102), la partie de verrouillage (96) se présentant sous la forme d'une rainure de type coin s'élargissant dans la direction de l'axe du matériau en barre (102), de manière à ce que la partie la plus large de la rainure de type coin se trouve du côté du matériau en barre (102) ;
une partie de contact réalisant un contact avec ladite partie de verrouillage (96) de manière à ce que ladite partie de contact (97) presse ladite partie de verrouillage (96) vers ledit élément de support (93, 94) dans une direction presque perpendiculaire à l'axe du matériau en barre (102) sous l'effet du poids propre du matériau en barre (102),
dans lequel ledit élément de support (93, 94) comprend une partie de tube (94) ayant une surface intérieure (98), dans laquelle une extrémité de la tige de verre (95) est insérée avec une certaine marge, et dans lequel ladite partie de contact dudit mécanisme d'ajustement comprend une broche (97) placée entre ladite surface intérieure (98) de ladite partie de tube (94) et ladite partie de verrouillage (96) à travers ladite partie de tube.

2. Dispositif de préhension d'un matériau de base pour fibres optiques selon la revendication 1, **caractérisé en ce que** ladite broche (97) présente une zone plate (100) établissant un contact avec ladite partie de verrouillage (96).

3. Dispositif de préhension d'un matériau de base pour fibres optiques selon la revendication 2, **caractérisé en ce que** ladite partie de verrouillage (96) présente une pente (99), dans lequel un angle formé entre ladite pente (99) et la direction axiale de la tige de verre (95) mesure de 10 à 50 degrés.
